# EUROPEAN PATENT SPECIFICATION

(11) **EP 2 065 519 B1**
(45) Date of publication and mention of the grant of the patent: **26.01.2011**
(21) Application number: 07121911.7
(22) Date of filing: 29.11.2007
(51) Int. Cl.: E02F 9/22

(54) **Method of operating a machine having a hydraulic work arm system, and machine equipped with a hydraulic work arm system with boost possibility.**
Verfahren zum Betrieb einer Maschine, die mit einem hydraulischen Arbeitsarmsystem ausgestattet ist und Maschine ausgestattet mit einem hydraulischen Arbeitsarmsystem mit Auflademöglichkeit.
Procédé pour opérer une machine ayant un système de bras de travail hydraulique et machine équipée d'un système de bras de travail hydraulique avec possibilité de suralimentation.

(43) Date of publication of application: 03.06.2009
(73) Proprietor: CATERPILLAR INC., Peoria IL 61629-6490 (US)
(72) Inventor: Hanks, Benjamin J., Leicester LE3 9GA (GB); Smith, Andrew J., Ashbourne DE6 1AT (GB)
(74) Representative: Hatzmann, Martin

(56) References cited:
- EP-A- 0 879 921
- WO-A-86/06142
- DE-A1- 2 757 840
- GB-A- 1 245 376
- US-A- 3 916 624
- US-A- 4 044 786
- US-A- 4 449 365
- US-A- 4 898 078
- US-A- 6 029 445
- US-A1- 2005 210 871

## Description

### Technical Field

The disclosure relates to a hydraulic work arm system with a boost possibility.

### Background

From practice a machine is known having multiple hydraulically actuated elements, such as at least one hydraulic work arm valve assembly for controlling the hydraulic flow to a work arm and possibly a hydraulic steering valve assembly for example for steering. The work arm can for example be a backhoe, a loader or the like.

This known machine is provided with a single pump which is connected to a hydraulic steering valve assembly and a loader valve assembly via a priority valve. This pump is also connected to the backhoe valve assembly. When the backhoe is used, no steering or loader action tends to be required. Consequently, the entire pump capacity can be used for backhoe operation. When the loader is used, the pump capacity has to be shared by the hydraulic steering valve assembly and the loader valve assembly for the operating the loader.

More specifically, in the known system an outlet of the pump is connected to a backhoe valve assembly. The outlet of the pump is also connected to a priority valve. The priority valve is connected to the hydraulic steering valve assembly and the loader valve assembly. When hydraulic fluid is required for the hydraulic steering valve assembly, the priority valve directs the hydraulic fluid to the steering valve assembly. The loader valve assembly is supplied with hydraulic fluid upon requirement, however, the hydraulic steering valve assembly has priority over the loader valve unit. When the backhoe is operated, no steering of the machine may be required. In fact, in most instances the machine will rest upon the extendible stabilizer legs when the backhoe is operated. All hydraulic fluid can be directed to the backhoe valve assembly. The priority valve is rather expensive. Further, the capacity of the backhoe is limited by the capacity of the pump.

Also known is US2005/0210871 which discloses a work vehicle hydraulic system in which a fixed displacement pump is present which may be connected via at least a priority valve to a valve assembly for a loader, a valve assembly for a backhoe and to a steering valve assembly. The known system also includes a second pump of the fixed displacement type connected to a pressure release valve and a reloader valve. The complexity of the known system renders it costly.

US-6,029,445 discloses a variable flow hydraulic system including a fixed displacement pump and a variable displacement pump for supplying pressurized hydraulic fluid in a machine. Along with the dual pumps, the system includes a reservoir, a flow sensitive unloading valve, and a conduit system for distributing fluid flow between the system components. The reservoir stores fluid for use in a work circuit with an actuator for performing work in response to applied fluid flow. The fixed and variable displacement pumps are driven by a power source (e.g., an engine) to provide a fixed and a variable fluid flow, respectively. The variable flow is applied to the work circuit. As for the fixed flow that is passed to a steering cylinder that has priority for actuating the vehicle's steering mechanism, and typically requires only a relatively small amount of flow. The rest of the fluid normally passing through steering cylinder can be redirected by the hydraulic system to the work circuit in order to perform useful work under certain conditions. The unloading valve switches the fixed flow to either bypass or be applied to the work circuit in response to a flow signal, which depends upon the fluid flow being applied to the work circuit. The flow signal can be a differential pressure signal generated as the flow applied to the work circuit passes through a restriction in the conduit, which supplies fluid flow to the work circuit. As the fixed flow is switched to and bypassed from the work circuit, the inherent flow compensation characteristics of the variable displacement pump provide for smooth, accurate, responsive and efficient machine operation.

The current disclosure is aimed at overcoming some or all of the disadvantages associated with the prior art.

### Summary of the Invention

In one aspect of the disclosure a method of operating a machine is provided provided according to claim 1. More particularly, the method includes providing a first work arm valve assembly with a first flow and providing a steering valve assembly of the open centre type with a second flow and directing the second flow through the steering valve assembly. A fluid characteristic of said first flow is determined. In response to determining said fluid characteristic of said first flow at least a portion of said second flow is selectively directed towards said work arm valve assembly after the second flow has passed the steering valve assembly and in response to determining said fluid characteristic of said first flow. The position of the control valve is additionally controlled by a load signal indicative of a load on the first work arm valve assembly.

In another aspect a machine is provided according to claim 9. More particularly, the machine includes a first work arm, a steering unit, a first work arm valve assembly for actuating said first work arm, and a steering valve assembly for controlling the steering unit, the steering valve assembly being of the open centre type. A first pump of the variable displacement type is in fluid connection with said first work arm valve assembly for providing a first flow to said first work arm valve assembly. A second pump of the fixed displacement type is in fluid connection with the steering valve assembly for providing a second flow to steering valve assembly. The machine is further provided with a control valve down stream of the steering valve arrangement is configured to selectively direct at least a portion of said second flow towards said first work arm valve assembly in response to determining said fluid characteristic of said first flow. The control valve is a two-way valve having an inlet, a first outlet and a second outlet. The two-way valve has a first position in which the inlet is in fluid connection with the first outlet and the two-way valve has a second position in which the inlet is fluid connection with the second outlet. The first outlet is in fluid connection with a hydraulic fluid reservoir. The second outlet is in fluid communication with an inlet of said first work arm valve assembly. The inlet of the control valve is in fluid connection with the outlet of the second pump via the steering valve assembly. The control valve is connected via a load signal line to the first work arm valve assembly for determining the load on the first work arm valve assembly.

### Brief Description of the Drawings

Fig. 1 is a side elevation view of an exemplary embodiment of a machine;

Fig. 2 is a diagrammatic scheme of an exemplary embodiment of an hydraulic system of such a machine in a first condition;

Fig. 3 is a diagrammatic scheme of the exemplary embodiment of Fig. 2 in a second condition

### Detailed Description

Reference will now be made in detail to an embodiment of the disclosure, examples of which are illustrated in the accompanying drawings. Wherever possible, the same reference numbers will be used throughout the drawings to refer to the same or like parts.

The embodiment disclosed by way of example may be a machine V having a first work arm 2 and a first work arm valve assembly 9 for actuating said first work arm 2. The machine V may further include a steering unit 17a controlled by a steering valve assembly 17. A first pump 20 may be in fluid connection with said first work arm valve assembly 9 for providing a first flow F1 to said first work arm valve assembly 9. A second pump 18 may be in fluid connection with the steering valve assembly 17 for providing a second flow F2 to steering valve assembly 17. A control valve 23 may be provided that may be configured for selectively directing at least a portion of said second flow F2 towards said first work arm valve assembly 9 in response to determining a fluid characteristic of said first flow F1.

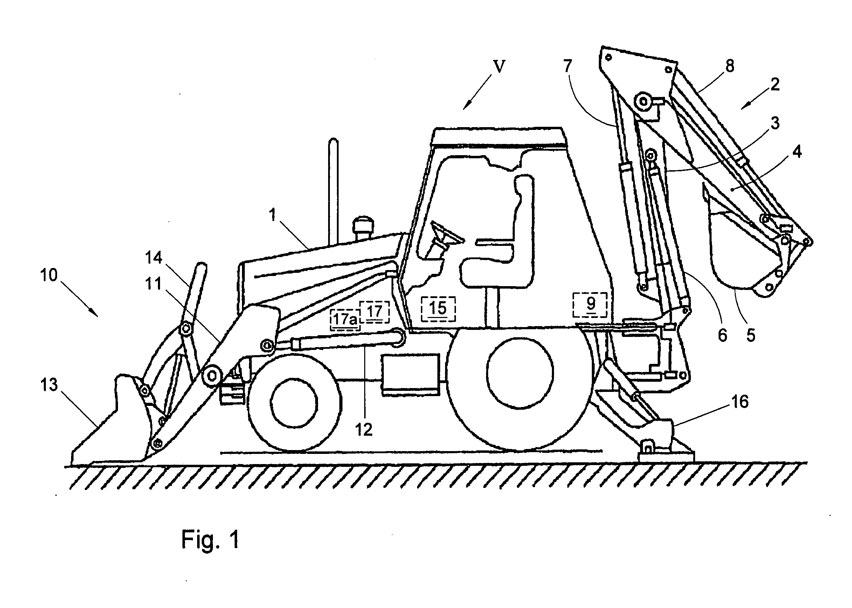

Fig. 1 shows an exemplary embodiment of a machine V. The machine V may for example be a vehicle with multiple actuated hydraulic elements. The machine V may have a body 1. To the back of the body 1 a first hydraulic work arm 2 may be connected. As shown in Fig. 1 the first hydraulic work arm may include a backhoe boom 3, a stick 4 and a bucket 5. One end of the backhoe boom 3 may be hingedly connected to the body 1 at, for example, the back end thereof. One end of the stick 4 may be hingedly connected to another other end of the boom 3. At the other end of the stick 4 the bucket 5 may be hingedly connected. Hydraulic actuators 6, 7, 8 may control the relative angles of the boom 3, the stick 4 and the bucket 5. The hydraulic actuators 6, 7, 8 may be controlled by a first work arm valve assembly 9. Other tools may also be attached to the boom 3 or the extendible stick 4. An example is a thumb to increase the versatility of the backhoe loader with the ability to grip, grab and sort virtually any material. Other examples of tools include a cold planer for asphalt and concrete planing work, a vibrator plate compactor, an auger for drilling holes, a ripper for breaking up hard soil and frost, a hydraulic hammer, etcetera.

For example to the front end of the body 1 a second hydraulic work arm 10 may be connected. It should be noted that a machine V having only one work arm is also part of the present disclosure. In the embodiment shown in Fig. 1, the second hydraulic work arm 10 may include a loader linkage 11, which may be hingedly connected with one end to the body 1, for example at the front side thereof. The angle of the loader linkage 11 relative to the body may be controlled by hydraulic actuators 12. At the other end of the loader linkage 11 several tools 13 may be connected. Also this connection may be a hinge connection. The angle of the tool 13, relative to the loader linkage 11 may be controlled by hydraulic actuators 14. The hydraulic actuators 12, 14 may be controlled by a second work arm valve assembly 15. In the embodiment shown in Fig. 1 the tool 13 is a loader. Another example of a tool which may be attached to the loader linkage 11 is multi purpose bucket which is generally used for dozing, rehandling, grading and dumping as well as grasping irregular objects. Other examples of tools which can be attached to the loader linkage 11 may include pallet forks, material handling arms, brooms, angle blades to move dirt, gravel waste or snow, a bale spear, an asphalt cutter, a rake, etcetera.

The body 1 may be provided at the back with stabilizer legs 16 on which the machine V may rest when the first work arm 2 is operated. When the first work arm 2 is operated, no steering may be required.

When the second work arm 10 is operated, steering may be required. For that purpose, the machine V may have a hydraulic steering unit 17a which may be actuated by a hydraulic steering valve assembly 17. The hydraulic steering valve assembly 17 may, instead of for steering, also be used for other tasks of a machine V, such as for example, hoisting or driving a load such as a pump or a generator or the like.

In the embodiment of Fig. 1, the first hydraulic work arm 2 and second hydraulic work arm 10 as well as the hydraulic steering valve assembly 17 are part of a hydraulic system.

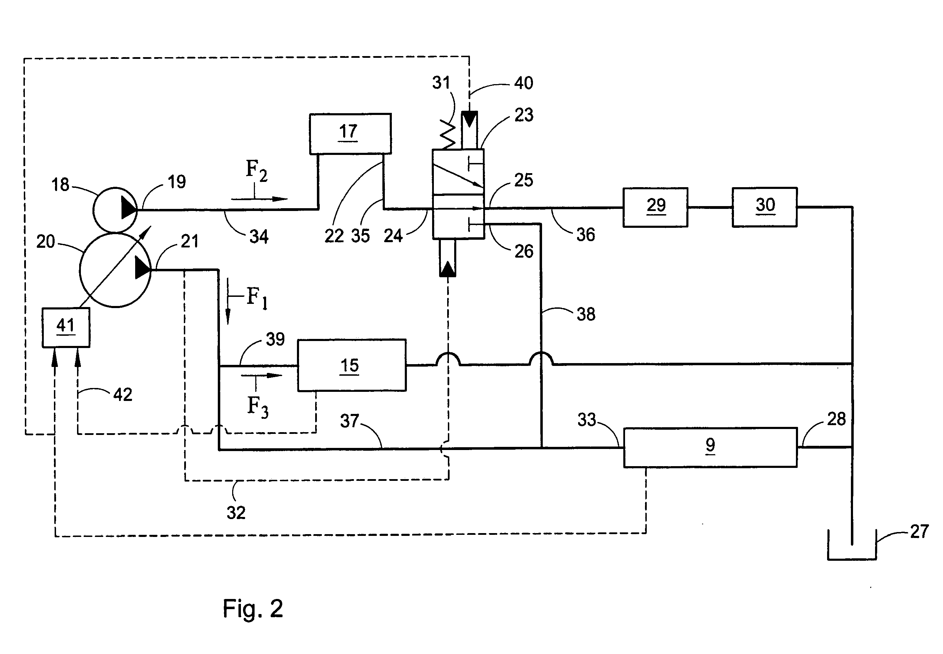

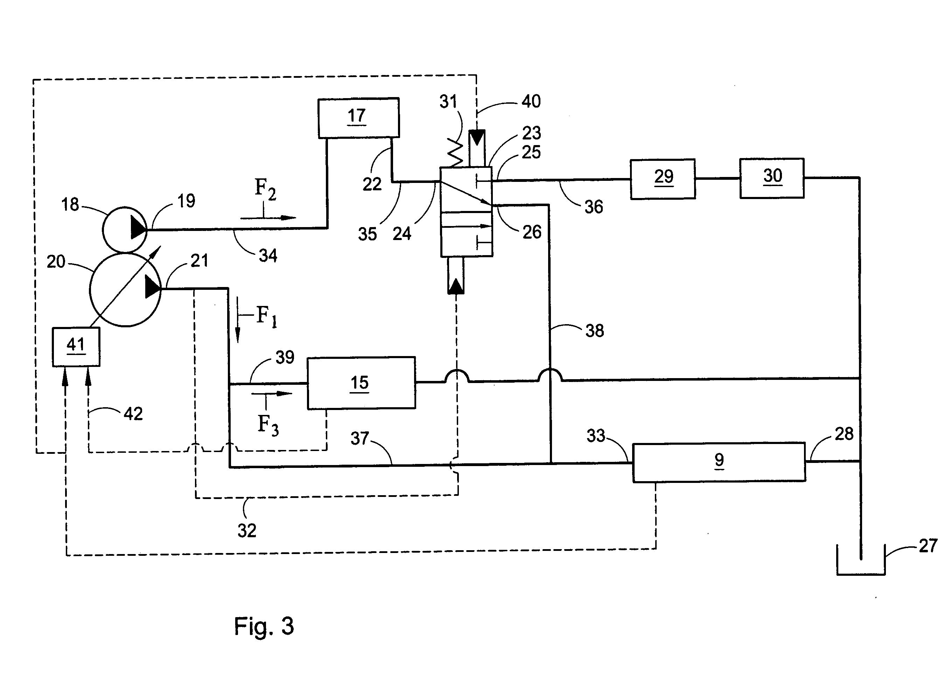

Fig. 2 shows an embodiment of a hydraulic system of the machine V in a first condition. Fig. 3 shows the same embodiment in a second condition. The hydraulic system may include a first pump 20 of the variable displacement type having a first pump outlet 21. A pump 20 of the variable displacement type may provide a pump range starting from a zero flow up to a certain maximum flow and pressure. To that end, a pump controller 41 may be present. The pump controller may receive a load signal 40 from the first valve assembly 9 and a load signal 42 from the second valve assembly 15. Dependent on these load signals 40, 42, the first pump 20 may be controlled. Also provided may be a second pump 18 having a second pump outlet 19. The second pump 18 may be of the fixed displacement type which means that the flow and the pressure provided by the second pump 18 may not be controllable. A first work arm valve assembly 9 may be provided for example for controlling various fluid flows to actuators 6, 7, 8 of the first hydraulic working arm 2. A second work arm valve assembly 15 may be provided for example for controlling the various fluid flows to actuators 12, 14 of second hydraulic work arm 10. The first pump outlet 21 of the first pump 20 may be in fluid connection via fluid line 37 with the first work arm valve assembly 9 and may be in fluid connection via a fluid line 39 with second work arm valve assembly 15. The first work arm valve assembly 9 and the second work arm valve assembly 15 may be of the closed centre type. This means that when the actuators 6, 7, 8, 12, 14 require no fluid flow, no or minimal fluid flow is used by work arm valve assemblies 9, 15. In this situation, the first pump 20 of the variable displacement type may be controlled so that no or minimal fluid flow is delivered via outlet 21.

The second pump outlet 19 of the second pump 18 may be in fluid connection via fluid line 34 with the hydraulic steering valve assembly 17. An outlet 22 of the hydraulic steering valve assembly 17 may be in fluid connection via fluid line 35 with an inlet 24 of a control valve 23. The control valve 23 may be a two-way valve 23. A first outlet 25 of the control valve 23 may be in fluid connection with a hydraulic fluid reservoir 27 via fluid line 36. A cooler 29 and a filter 30 may be included in the fluid line 36 between the first outlet 25 of the control valve 23 and the hydraulic fluid reservoir 27. A second outlet 26 of the control valve 23 may be in fluid connection with the first work arm valve assembly 9 via fluid line 38. An inlet of control line 32 may be connected to the fluid line 37 extending between the first pump 20 and the first work arm valve assembly 9. The connection of the control line 32 to fluid line 37 may be adjacent the first pump outlet 21. The inlet of control line 32 may also be connected to a high pressure chamber in first pump. A spring or other biasing member 31 may be provided which may bias the two-way valve 23 in a second position (see Fig. 3). When a characteristic of the first flow F1 is at or above a first margin pressure, the control valve 23 may be moved towards a first position (see Fig. 2). When a characteristic of the first flow F1 is at or below a second margin pressure, the control valve 23 may be moved towards a second position (see Fig. 3). The characteristic may also be compensated by a load signal 40 that indicates the load on the first valve assembly 9. In an embodiment, the control line 32 may be a conduit that may convey a fluid pressure. A load signal 40 coming from first work arm valve assembly 9 may also be conveyed as a fluid pressure via a conduit connected to the control valve 23. The difference between the pump output signal transmitted via control line 32 and the load signal 40 together with the force exerted by biasing member 31 may determine the position of the control valve 23.

In another embodiment, the control line 32 may be a signal line, for example, an electrically conductive signal line. In an embodiment, the characteristic of the first flow F1 may be obtained by a sensor that produces a signal that may be indicative of the characteristic of the first flow F1. The signal may be an electric signal, a hydraulic signal or a mechanical signal. The load signal 40 of the first valve assembly may also be an electric signal, a hydraulic signal or a mechanical signal. The signal may be used for steering the control valve 23 to either one of the first and the second position. The characteristic of the first flow F1 could for example be pressure or flow of the first flow F1. In an embodiment, the compensation of the control signal with the load signal 40 may be omitted and the position of the control valve 23 may be determined solely by control signal.

In the embodiment shown in Fig. 1, of which Figs. 2 and 3 show an example of the hydraulic system, the first hydraulic work arm 2 may be a backhoe and the second hydraulic work arm 10 may be a loader. The first work arm valve assembly 9 may be a backhoe valve assembly and the second work arm valve assembly 15 may be a loader valve assembly.

### Industrial Applicability

The disclosure also provides a method of operating a machine V of which, by way of example, an embodiment has been described hereabove. The method of operating the machine V may include providing the first work arm valve assembly 9 with a first flow F1 and providing a steering valve assembly 17 with a second flow F2. The method may further include determining a fluid characteristic of said first flow F1 and selectively directing at least a portion of said second flow F2 towards said work arm valve assembly 9 in response to determining said fluid characteristic of said first flow F1.

The second flow F2 supplied by the second pump 18 may be directed through a hydraulic steering valve assembly 17, for example used for hydraulic steering of a vehicle. The hydraulic steering valve assembly 17 may be of the open centre type so that when no load is present to be driven by the hydraulic steering valve assembly 17, the second flow F2 flows substantially unrestricted through the hydraulic steering valve assembly 17. The second flow F2 may then flow to control valve 23. The control valve 23 may direct the second flow F2 either to reservoir 27 or to the first work arm valve assembly 9 for example for controlling the flow to the actuators 6, 7, 8 of a first work arm and to provide boost action to the first work arm valve assembly 9.

The first work arm 2 is normally operated by means of a first flow F1 provided by a first pump 20 of the variable displacement type. The output of the first pump may be controlled by pump controller 41 which has as an input load signal 40 coming from the first work arm valve assembly 9. When a characteristic of the first flow F1 is above or below a certain margin value the control valve 23 may switch from the first position (see Fig.2) to the second position (see Fig. 3). The characteristic may, for example, be the pressure of the first flow F1 adjacent the outlet 21 of the first pump 20. This pressure may be communicated to the first valve via control line 32. A spring or biasing member 31 may bias the control valve 23 in the second position. A load signal 40 coming from the first valve assembly may bias the control valve 23 in the second position. When the pressure in the control line 32 is below a first margin pressure, the control valve 23 may move towards the second position shown in Fig. 3. When the pressure in the control line 32 is above a second margin pressure, the control valve 23 may move to the first position shown in Fig. 2. The first and the second margin pressure may have the same value. In another embodiment the first margin pressure may be smaller than the second margin pressure thus providing a dead band in the control range. The pressure in the control line 32 may be counteracted by the pressure conveyed by the load signal 40.

In the second position, the first work arm valve assembly 9 and therewith the first work arm 2 receives a power boost because both the first pump 20 and the second pump 18 supply a fluid flow to the first work arm valve assembly 9. Further, the entire power of the second pump 18 may be available for the hydraulic steering valve assembly 17.

In another embodiment, the characteristic of the first flow F1 which may determine the position of the control valve 23 may be the flow. When the flow in fluid line 37 is above a first margin value, the control valve may assume the second position shown in Fig. 3. When the flow in fluid line 37 is below a certain margin value, the control valve 23 may assume the first position shown in Fig. 2. Again, the first and the second margin values may be the same or, alternatively, may differ to provide a dead band in the control range.

The first pump 20 may also provide the second work arm valve assembly 15 with a third flow F3, for example, for controlling the various fluid flows to the actuators 12, 14 of the second work arm 10. Load signal 42 coming from the second work arm valve assembly 15 may control pump controller 41 for controlling the output of the first pump 20.

In the embodiment of the machine V shown in Fig. 1, the hydraulic system thereof shown in Figs. 2 and 3 may assume two operation modes. In the first operation mode, the first hydraulic work arm 2 may be operated and the second hydraulic work arm 10 and the hydraulic steering valve assembly 17 for the steering may not be in use. In the second operation mode, the second hydraulic work arm 10 and the hydraulic steering valve assembly 17 for steering may be operated and the first hydraulic work arm 2 may not be in use.

In the first operation mode, the first pump 20 may be in fluid connection with the inlet 33 of the first work arm valve assembly 9. When the first hydraulic work arm 2 only requires a limited capacity, the first pump 20 can supply sufficient pressure and flow to the first work arm valve assembly 9 for operating the first hydraulic work arm 2. This condition is shown in Fig. 2.

However, when the pressure supplied by the first pump 20 decreases, for example, due to high flow demands of the first work arm valve assembly 9, the pressure in the control line 32 may decrease accordingly. Below a first margin pressure in the control line 32, the two-way valve biasing member 31 may move the control valve 23 towards the second position shown in Fig. 3. In this condition of the first operation mode, the capacity of the first pump 20 and the capacity of the second pump 18 may both be available for operating the first work arm valve assembly 9 and therewith the first hydraulic work arm 2. Thus, when under high flow demands, the pressure in control line 32 may decay, causing the control valve 23 to shift and divert hydraulic fluid flow F2 from the second pump 18 to the first work arm valve assembly 9. A similar behavior may be obtained when the determining characteristic of the first flow F1 is the flow instead of the pressure. Also a combination of both characteristics or other characteristics of the first flow F1 might be used.

In the second operation mode, the second hydraulic work arm 10 may be operated and steering may be required. A second hydraulic fluid flow F2 leaving the second pump 18 may power the open centre hydraulic steering valve assembly 17 and may flow from the hydraulic steering valve assembly 17 via valve 23, cooler 29 and filter 30 to hydraulic fluid reservoir 27. First hydraulic fluid flow F1 from the first pump 20 may flow to the second work arm valve assembly 15 and the power thereof may be used for operating the second hydraulic work arm 10. The two-way valve 23 may be in the position shown in Fig. 2. In the second operation mode, the entire power of the second pump 18 may be available for the hydraulic steering valve assembly 17 and the entire power of the first pump 20 may be available for the second hydraulic work arm 10.

Contrary, to the known prior art systems, the system of the present disclosure may dispose of a priority valve to direct the hydraulic fluid either to the hydraulic steering valve assembly or the loader valve assembly. Further, pressure release valves for releasing pressure and reloader valves as used in US2005/0210871 may be disposed of because the first pump may be of the variable displacement type. The rather expensive priority valve may be dispensed with because of the fact that the hydraulic steering valve assembly 17 may have its own source embodied by the second pump 18.

In the embodiment of Figs. 2 and 3, the hydraulic steering valve assembly 17 may be of the open centre type. As a consequence thereof, the second pump 18 may be of the fixed displacement type. Such a pump may be relatively cheap. An open centre type hydraulic steering valve assembly 17 may be cheaper than a closed centre hydraulic steering valve assembly. Further, pressure release valves may be disposed of upstream from the hydraulic steering valve assembly 17 thereby avoiding or minimizing pressure spikes in the system. Due to the more constant flow, the cooler 29 and the filter 30 may be smaller which saves costs. Further, a flow limiter may be eliminated relative to the prior art hydraulic system, which may also save costs.

Although the preferred embodiments of this invention have been described herein, improvements and modifications may be incorporated without departing from the scope of the following claims.

## Claims

1. A method of operating a machine (V) comprising:
providing a first work arm valve assembly (9) with a first flow (F1);
providing a steering valve assembly (17) of an open centre type with a second flow (F2) and directing the second flow (F2) through the steering valve assembly (17);
determining a fluid characteristic of said first flow (F1);
selectively directing by a control valve (23) at least a portion of said second flow (F2) towards said work arm valve assembly (9) after the second flow (F2) has passed the steering valve assembly (17) and in response to determining said fluid characteristic of said first flow (F1);
**characterized in that**
the position of the control valve (23) is also controlled by a load signal (40) indicative of a load on the first work arm valve assembly (9).

2. The method according to claim 1, the control valve (23) being a two-way valve having an inlet (24), a first outlet (25) and a second outlet (26), the two-way valve (23) having a first position in which the inlet (24) is in fluid connection with the first outlet (25), the two-way valve having a second position in which the inlet is fluid connection with the second outlet (26), the first outlet (25) being in fluid connection with a hydraulic fluid reservoir (27), the second outlet (26) being in fluid communication with an inlet (33) of said first work arm valve assembly (9), the method including:
feeding the inlet (24) with the second flow (F2); and
controlling the position of the control valve (23) in response to the fluid characteristic of said first flow (F1) for the selectively directing at least a portion of said second flow (F2) towards said first work arm valve assembly (9).

3. The method according to any of the claims 1-2, wherein the characteristic of the first flow (F1) that determines the selectively directing of at least a portion of the second flow (F2) is the pressure in the first flow (F1) upstream of the first work arm valve assembly (9).

4. The method according to any one of claims 1-2, wherein the characteristic of the first flow (F1) that determines the selectively directing of at least a portion of the second flow (F2) is the flow of the first flow (F1) upstream of the first work arm valve assembly (9).

5. The method according to any of the previous claims, wherein at least a part (F3) of the first flow (F1) from the first pump (20) is directed to a second work arm valve assembly (15) for controlling a second work arm (10).

6. The method according to claim 5, wherein the second work arm valve assembly (15) is of the closed centre type.

7. The method according to claim 1, including controlling a backhoe type work arm (2) with the first work arm valve assembly (9).

8. The method according to claim 5 or 6, including controlling a loader type work arm (10) with the second work arm valve assembly (15).

9. A machine (V) comprising:
a first work arm (2);
a steering unit (17a);
a first work arm valve assembly (9) for actuating said first work arm (2);
a steering valve assembly (17) for controlling the steering unit (17a), the steering valve assembly (17a) being of the open centre type;
a first pump (20) of the variable displacement type in fluid connection with said first work arm valve assembly (9) for providing a first flow (F1) to said first work arm valve assembly (9);
a second pump (18) of the fixed displacement type in fluid connection with the steering valve assembly (17) for providing a second flow (F2) to steering valve assembly (17);
a control valve (23) downstream of the steering valve arrangement (17) configured to selectively direct at least a portion of said second flow (F2) towards said first work arm valve assembly (9) in response to determining a fluid characteristic of said first flow (F1);
the control valve (23) being a two-way valve having an inlet (24), a first outlet (25) and a second outlet (26), the two-way valve (23) having a first position in which the inlet (24) is in fluid connection with the first outlet (25), the two-way valve (23) having a second position in which the inlet (24) is fluid connection with the second outlet (26), the first outlet being in fluid connection with a hydraulic fluid reservoir (27), the second outlet (26) being in fluid communication with an inlet (33) of said first work arm valve assembly (9), the inlet (24) of the control valve (23) being in fluid connection with the outlet (19) of the second pump (18) via the steering valve assembly (17);
**characterized in that**
the control valve (23) is connected via a load signal line (40) to the first work arm valve assembly (9) for determining the load on the first work arm valve assembly (9).

10. The machine according to claim 9, wherein the control valve (23) includes a biasing member (31) that is configured to bias the control valve (23) in the second position, the control valve (23) being connected via a control line (32) to a fluid line (37) connecting the first pump (20) and the first work arm valve assembly (9) or to a high pressure chamber of the first pump (20) for determining the fluid characteristic in said first flow (F1).

11. The machine according to claim 10, wherein the control line (32) is connected to the fluid line (37) adjacent the outlet of the first pump (20).

12. The machine according to claim 9, wherein the fluid characteristic which determines the position of the control valve (23) is the pressure of the first flow (F1), wherein the control valve (23) assumes the first position when the pressure in of the first flow (F1) is above a certain margin pressure and assumes the second position when the pressure of the first flow (F1) is below a certain margin pressure.

13. The machine according to claim 9, wherein the fluid characteristic which determines the position of the control valve (23) is the flow of the first flow (F1), wherein the control valve (23) assumes the first position when the flow of the first flow (F1) is below a certain margin flow and assumes the second position when the flow of the first flow (F1) is above a certain margin flow.

14. The machine according to any one of claims 9-13, including:
a second work arm (10);
a second work arm valve assembly (15);
wherein the second work arm valve assembly (15) has an inlet (39) which is in fluid connection with the outlet (21) of the first pump (20).

15. The machine according to claim 14, wherein the second work arm valve assembly (15) is of the closed centre type.

16. The machine according to any one of claims 9-15, wherein the first work arm (2) is a backhoe type work arm.

17. The machine according to any one of claims 14-15, wherein the second work arm (10) is a loader type work arm.

18. The machine according to claim 9, wherein the first outlet (25) of the control valve (23) is in fluid connection with the hydraulic fluid reservoir (27) via a cooler (29) and a filter (30).

## Patentansprüche

1. Verfahren zum Betreiben einer Maschine (V), umfassend:
Versorgen einer ersten Arbeitsarmventilanordnung (9) mit einem ersten Fluss (F1);
Versorgen einer Steuerungsventilanordnung (17) mit offener Mittelstellung mit einem zweiten Fluss (F2) und Lenken des zweiten Flusses (F2) durch die Steuerventilanordnung (17);
Bestimmen der Fliesseigenschaften des ersten Flusses (F1);
wahlweise Lenken wenigstens eines Teils des zweiten Flusses (F2) zu der Arbeitsarmventilanordnung (9) mittels eines Steuerungsventils (23), nachdem der zweite Fluss (F2) die Steuerungsventilanordnung (17) passiert hat,
und zwar als Reaktion auf die Bestimmung der Fliesseigenschaften des ersten Flusses (F1);
**dadurch gekennzeichnet, dass**
die Position des Steuerungsventils (23) auch über ein Lastsignal (40) gesteuert wird, welches eine Last der ersten Arbeitsarmnventilanordnung (9) anzeigt.

2. Verfahren nach Anspruch 1, wobei das Steuerungsventil (23) ein Zwei-Wege-Ventil mit einem Einlass (24), einem ersten Auslass (25) und einem zweiten Auslass (26) ist, das Zwei-Wege-Ventil (23) eine erste Position hat, in welcher der Einlass (24) in einer Flussverbindung mit dem ersten Auslass (25) steht, das Zwei-Wege-Ventil eine zweite Position hat, in welcher der Einlass in einer Flussverbindung mit dem zweiten Auslass (26) steht, der erste Auslass (25) in einer Flussverbindung mit einem Hydraulikfluidreservoir (27) steht, der zweite Auslass (26) in einer Flussverbindung mit einem Einlass (33) der ersten Arbeitsarmventilanordnung (9) steht und das Verfahren umfasst:
Einspeisen des zweiten Flusses (F2) in den Einlass (24), und
Steuern der Position des Steuerungsventils (23) als Reaktion auf die Fliesseigenschaften des ersten Flusses (F1) zum wahlweisen Umlenken wenigstens eines Teils des zweiten Flusses (F2) in die Richtung der ersten Arbeitsarmventilanordnung (9).

3. Verfahren nach einem der Ansprüche 1 bis 2, wobei die Eigenschaft des ersten Flusses (F1), welche die wahlweise Umlenkung wenigstens eines Teils des zweiten Flusses (F2) bestimmt, der Druck des ersten Flusses (F1) stromaufwärts der ersten Arbeitsarmventilanordnung (9) ist.

4. Verfahren nach einem der Ansprüche 1 bis 2, wobei die Eigenschaft des ersten Flusses (F1), welche das wahlweise Umlenken wenigstens eines Teils des zweiten Flusses (F2) bestimmt, der Durchfluss des ersten Flusses (F1) stromaufwärts der ersten Arbeitsarmventilanordnung (9) ist.

5. Verfahren nach einem der vorhergehenden Ansprüche, wobei wenigstens ein Teil (F3) des ersten Flusses (F1) von der ersten Pumpe (20) einer zweiten Arbeitsarmventilanordnung (15) zur Steuerung eines zweiten Arbeitsarms (10) gelenkt wird.

6. Verfahren nach Anspruch 5, wobei die zweite Arbeitsarmventilanordnung (15) vom Typ mit geschlossener Mittelstellung ist.

7. Verfahren nach Anspruch 1, umfassend das Steuern eines Arbeitsarms (2) vom Löffelbaggertyp mit der ersten Arbeitsarmventilanordnung (9).

8. Verfahren nach Anspruch 5 oder 6, umfassend das Steuern eines Arbeitsarms (10) vom Flugbaggertyp mit der zweiten Arbeitsarmventilanordnung (15).

9. Maschine (V), umfassend:
einen ersten Arbeitsarm (2);
eine Lenkeinheit (17a);
eine erste Arbeitsarmventilanordnung (9) zum Betätigen des ersten Arbeitsarms (2);
eine Steuerventilanordnung (17) zum Steuern der Lenkeinheit (17a), wobei die Steuerventilanordnung (17a) vom Typ mit offener Mittelstellung ist;
eine erste Pumpe (20) mit variablem Hub in Fluidverbindung mit der ersten Arbeitsarmventilanordnung (9) zum Bereitstellen eines ersten Flusses (F1) für die erste Arbeitsarmventilanordnung (9);
eine zweite Pumpe (18) mit festem Hub in Fluidverbindung mit der Lenkventilanordnung (17) zum Bereitstellen eines zweiten Flusses (F2) für die Lenkventilanordnung (17);
ein Steuerventil (23) stromabwärts der Lenkventilanordnung (17), welches zum wahlweisen Lenken wenigstens eines Teils des zweiten Flusses (F2) in Richtung der ersten Arbeitsarmventilanordnung (9) als Reaktion auf die Bestimmung einer Fliesseigenschaft des ersten Flusses (F1) ausgelegt ist;
wobei das Steuerventil (23) ein Zwei-Wege-Ventil mit einem Einlass (24),
einem ersten Auslass (25) und einem zweiten Auslass (26) ist, das Zwei-Wege-Ventil (23) eine erste Position hat, in welcher der Einlass (24) in Fluidverbindung mit dem ersten Auslass (25) steht, das Zwei-Wege-Ventil (23) eine zweite Position hat, in welcher der Einlass (24) in Fluidverbindung mit dem zweiten Auslass (26) ist, der erste Auslass in Fluidverbindung mit einem Hydraulikfluidreservoir (27) steht, der zweite Auslass (26) in Fluidverbindung mit einem Einlass (33) der ersten Arbeitsarmventilanordnung (9) steht, der Einlass (24) des Steuerungsventils (23) über die Lenkventilanordnung (17) in Fluidverbindung mit dem Auslass (19) der zweiten Pumpe (18) steht;
**dadurch gekennzeichnet, dass**
das Steuerventil (23) über eine Lastsignalleitung (40) mit der ersten Arbeitsarmventilanordnung (9) verbunden ist, um die Last auf der ersten Arbeitsarmventilanordnung (9) zu bestimmen.

10. Maschine nach Anspruch 9, wobei das Steuerventil (23) ein Auslenkelement (31) umfasst, welches dazu ausgelegt ist, das Steuerventil (23) in die zweite Position auszulenken, wobei das Steuerventil (23) über die Steuerleitung (32) mit einer Fluidleitung (37) verbunden ist, welche die erste Pumpe (40) und die erste Arbeitsarmventilanordnung (9) oder eine Hochdruckkammer der ersten Pumpe (20) miteinander verbindet, um die Fliesseigenschaften des ersten Flusses (F1) zu bestimmen.

11. Maschine nach Anspruch 10, wobei die Steuerleitung (32) in der Nähe des Auslasses der ersten Pumpe (20) mit der Fluidleitung (37) verbunden ist.

12. Maschine nach Anspruch 9, wobei die Fliesseigenschaft, welche die Position des Steuerventils (23) bestimmt, der Druck des ersten Flusses (F1) ist, wobei das Steuerventil (23) die erste Position annimmt, wenn der Druck des ersten Flusses (F1) oberhalb eines gewissen Grenzdrucks liegt und die zweite Position annimmt, wenn der Druck des ersten Flusses (F1) unterhalb eines gewissen Grenzdrucks liegt.

13. Maschine nach Anspruch 9, wobei die Fliesseigenschaft, welche die Position des Steuerventils (23) bestimmt, der Durchfluss des ersten Flusses (F1) ist, wobei das Steuerventil (23) die erste Position annimmt, wenn der Durchfluss des ersten Flusses (F1) unterhalb eines gewissen Grenzdurchflusses liegt und die zweite Position annimmt, wenn der Fluss des ersten Flusses (F1) oberhalb eines gewissen Grenzflusses liegt.

14. Maschine nach einem der Ansprüche 9 bis 13, umfassend:
einen zweiten Arbeitsarm (10);
eine zweite Arbeitsarmventilanordnung (15);
wobei die zweite Arbeitsarmventilanordnung (15) einen Einlass (39) hat, der in Fluidverbindung mit dem Auslass (21) der ersten Pumpe (20) steht.

15. Maschine nach Anspruch 14, wobei die zweite Arbeitsarmventilanordnung (15) vom Typ mit geschlossener Mittelstellung ist.

16. Maschine nach einem der Ansprüche 9 bis 15, wobei der erste Arbeitsarm (2) vom Löffelbaggertyp ist.

17. Maschine nach einem der Ansprüche 14 bis 15, wobei der zweite Arbeitsarm (10) ein Arbeitsarm vom Flugbaggertyp ist.

18. Maschine nach Anspruch 9, wobei der erste Auslass (25) des Steuerventils (23) über einen Kühler (29) und einem Filter (30) in Fluidverbindung mit dem Hydraulikfluidreservoir (27) steht.

## Revendications

1. Procédé d'utilisation d'une machine (V) comprenant les opérations suivantes :
envoyer un premier flux (F1) dans un premier ensemble de vanne de bras de travail (9) ;
envoyer un deuxième flux (F2) dans un ensemble de vanne de direction (17) du type à centre ouvert et diriger le deuxième flux (F2) à travers l'ensemble de vanne de direction (17) ;
déterminer une caractéristique de fluide dudit premier flux (F1) ;
diriger sélectivement à l'aide d'une vanne de commande (23) au moins une partie dudit deuxième flux (F2) vers ledit ensemble de vanne de bras de travail (9) après que le deuxième flux (F2) est passé dans l'ensemble de vanne de direction (17) et en réponse à la détermination de ladite caractéristique de fluide dudit premier flux (F1) ;
**caractérisé en ce que** la position de la vanne de commande (23) est aussi commandée par un signal de charge (40) représentatif d'une charge exercée sur le premier ensemble de vanne de bras de travail (9).

2. Procédé selon la revendication 1, dans lequel la vanne de commande (23) est une vanne à deux voies ayant une entrée (24), une première sortie (25) et une deuxième sortie (26), la vanne à deux voies (23) ayant une première position dans laquelle l'entrée (24) est en connexion fluide avec la première sortie (25), la vanne à deux voies ayant une deuxième position dans laquelle l'entrée est en connexion fluide avec la deuxième sortie (26), la première sortie (25) étant en connexion fluide avec un réservoir de fluide hydraulique (27), la deuxième sortie (26) étant en communication fluide avec une entrée (33) dudit premier ensemble de vanne de bras de travail (9), le procédé comprenant les étapes suivantes :
envoyer le deuxième flux (F2) dans l'entrée (24) ; et
commander la position de la vanne de commande (23) en réponse à la caractéristique de fluide dudit premier flux (F1) pour la direction sélective d'au moins une partie du deuxième flux (F2) vers ledit premier ensemble de vanne de bras de travail (9).

3. Procédé selon l'une quelconque des revendications 1 à 2, dans lequel la caractéristique du premier flux (F1) qui détermine la direction sélective d'au moins une partie du deuxième flux (F2) est la pression du premier flux (F1) en amont du premier ensemble de vanne de bras de travail (9).

4. Procédé selon l'une quelconque des revendications 1 à 2, dans lequel la caractéristique du premier flux (F1) qui détermine la direction sélective d'au moins une partie du deuxième flux (F2) est le débit du premier flux (F1) en amont du premier ensemble de vanne de bras de travail (9).

5. Procédé selon l'une quelconque des revendications précédentes, dans lequel au moins une partie (F3) du premier flux (F1) provenant de la première pompe (20) est dirigée vers un deuxième ensemble de vanne de bras de travail (15) pour commander un deuxième bras de travail (10).

6. Procédé selon la revendication 5, dans lequel le deuxième ensemble de vanne de bras de travail (15) est du type à centre fermé.

7. Procédé selon la revendication 1, comprenant le fait de commander un bras de travail de type pelleteuse (2) avec le premier ensemble de vanne de bras de travail (9). -

8. Procédé selon la revendication 5 ou 6, comprenant le fait de commander un bras de travail de type chargeuse (10) avec le deuxième ensemble de vanne de bras de travail (15).

9. Machine (V) comprenant :
un premier bras de travail (2) ;
une unité de direction (17a) ;
un premier ensemble de vanne de bras de travail (9) pour actionner ledit premier bras de travail (2) ;
un ensemble de vanne de direction (17) pour commander l'unité de direction (17a), l'ensemble de vanne de direction (17) étant du type à centre ouvert ;
une première pompe (20) du type à cylindrée variable, en connexion fluide avec ledit premier ensemble de vanne de bras de travail (9) pour fournir un premier flux (F1) audit premier ensemble de vanne de bras de travail (9) ;
une deuxième pompe (18) du type à cylindrée fixe, en connexion fluide avec l'ensemble de vanne de direction (17) pour fournir un deuxième flux (F2) à l'ensemble de vanne de direction (17) ;
une vanne de commande (23) en aval de l'ensemble de vanne de direction (17) configuré pour diriger sélectivement au moins une partie dudit deuxième flux (F2) vers ledit premier ensemble de vanne de bras de travail (9) en réponse à la détermination d'une caractéristique de fluide dudit premier flux (F1) ;
la vanne de commande (23) étant une vanne à deux voies ayant une entrée (24), une première sortie (25) et une deuxième sortie (26), la vanne à deux voies (23) ayant une première position dans laquelle l'entrée (24) est en connexion fluide avec la première sortie (25), la vanne à deux voies (23) ayant une deuxième position dans laquelle l'entrée (24) est en connexion fluide avec la deuxième sortie (26), la première sortie étant en connexion fluide avec un réservoir de fluide hydraulique (27), la deuxième sortie (26) étant en communication fluide avec une entrée (33) dudit premier ensemble de vanne de bras de travail (9), l'entrée (24) de la vanne- de commande (23) étant en connexion fluide avec la sortie (19) de la deuxième pompe (18) par l'intermédiaire de l'ensemble de vanne de direction (17) ;
**caractérisée en ce que** la vanne de commande (23) est connectée au premier ensemble de vanne de bras de travail (9) par une ligne de signal de charge (40) pour déterminer la charge exercée sur le premier ensemble de vanne de bras de travail (9).

10. Machine selon la revendication 9, dans laquelle la vanne de commande (23) comprend un élément de sollicitation (31) qui est configuré pour mettre la vanne de commande (23) dans la deuxième position, la vanne de commande (23) étant connectée, par l'intermédiaire d'une ligne de commande (32), à une ligne de fluide (37) reliant la première pompe (20) au premier ensemble de vanne de bras de travail (9) ou à une chambre à haute pression de la première pompe (20) pour déterminer la caractéristique de fluide dans ledit premier flux (F1).

11. Machine selon la revendication 10, dans laquelle la ligne de commande (32) est connectée à la ligne de fluide (37) au voisinage de la sortie de la première pompe (20).

12. Machine selon la revendication 9, dans laquelle la caractéristique de fluide qui détermine la position de la vanne de commande (23) est la pression du premier flux (F1), la vanne de commande (23) se mettant dans le première position quand la pression du premier flux (F1) est supérieure à une certaine pression de marge et dans la deuxième position quand la pression du premier flux (F1) est inférieure à une certaine pression de marge.

13. Machine selon la revendication 9, dans laquelle la caractéristique de fluide qui détermine la position de la vanne de commande (23) est le débit du premier flux (F1), la vanne de commande (23) se mettant dans le première position quand le débit du premier flux (F1) est inférieur à un certain débit de marge et dans la deuxième position quand le débit du premier flux (F1) est supérieur à un certain débit de marge.

14. Machine selon l'une quelconque des revendications 9 à 13, comprenant :
un deuxième bras de travail (10) ;
un deuxième ensemble de vanne de bras de travail (15) ;
dans laquelle le deuxième ensemble de vanne de bras de travail (15) a une entrée (39) qui est en connexion fluide avec la sortie (21) de la première pompe (20).

15. Machine selon la revendication 14, dans laquelle le deuxième ensemble de vanne de bras de travail (15) est du type à centre fermé.

16. Machine selon l'une quelconque des revendications 9 à 15, dans laquelle le premier bras de travail (2) est un bras de travail de type pelleteuse.

17. Machine selon l'une quelconque des revendications 14 à 15, dans laquelle le deuxième bras de travail (10) est un bras de travail de type chargeuse.

18. Machine selon la revendication 9, dans laquelle la première sortie (25) de la vanne de commande (23) est en connexion fluide avec le réservoir de fluide hydraulique (27) par l'intermédiaire d'un refroidisseur (29) et d'un filtre (30).
